(19) Europäisches Patentamt
European Patent Office
Office européen des brevets

(11) **EP 1 270 410 A2**

(12) **EUROPÄISCHE PATENTANMELDUNG**

(43) Veröffentlichungstag:
**02.01.2003 Patentblatt 2003/01**

(51) Int Cl.[7]: **B64G 1/36**, B64G 1/64

(21) Anmeldenummer: **02011532.5**

(22) Anmeldetag: **23.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.06.2001 DE 10130623**

(71) Anmelder: **Jena-Optronik GmbH**
**07745 Jena (DE)**

(72) Erfinder: **Strietzel, Roland**
**01217 Dresden (DE)**

(74) Vertreter: **Freitag, Joachim, Dipl.-Phys. et al**
**Patentanwälte**
**Oehmke & Kollegen**
**Neugasse 13**
**07743 Jena (DE)**

(54) **Verfahren zur Bestimmung der Zustandsgrössen eines starren Körpers im Raum mittels eines Videometers**

(57) Die Erfindung betrifft ein Verfahren zum Bestimmen der Zustandsgrößen, wie relativer Position und Lage, eines bewegten starren Körpers im Raum, insbesondere für eine relative Annäherungsbewegung an einen anderen Körper.

Die Aufgabe, eine neue Möglichkeit zur Bestimmung der Zustandsgrößen eines bewegten Körpers im Raum zu finden, die unter Verwendung eines Bildsensors auf einem Körper und einer definierten Targetkonfiguration auf einem anderen Körper bei geringem Aufwand eine Echtzeit-Bestimmung der Positions- und Lagekoordinaten des einen Körpers relativ zum anderen Körper gestattet, wird erfindungsgemäß durch folgende Schritte gelöst:

- Aufnahme von Lichtpunkten als Abbildung einer mindestens vier Leuchtpunkte umfassenden, dreidimensionalen Targetkonfiguration mittels des Bildsensors, wobei in der Empfängerebene des Bildsensors eine zweidimensionale Projektion der dreidimensionalen Targetkonfiguration abgebildet wird,
- Bestimmung der x-y-Koordinaten von in die Empfängerebene projizierten Lichtpunkten als Messdaten in Form von projizierten Bildpunktvektoren,
- Berechnung der Zustandsgrößen des bewegten Körpers mittels eines Folgeregelkreises, der die Messdaten von jeweils in einer Bildaufnahme projizierten Lichtpunkten der Targetkonfiguration unter Nutzung einer Umkehrfunktion zum gewünschten Ausgangssignal der Zustandsgrößen des bewegten Körpers verarbeitet, wobei die Umkehrfunktion mittels einer mathematisch modellierten Abbildungsfunktion des Bildsensors, die den Zusammenhang zwischen den Zustandsgrößen von Position und Lage und den Koordinaten der Lichtpunkte in der Empfängerebene des Bildsensors für die gewählte Targetkonfiguration beschreibt, in einer Rückführung des Regelkreises realisiert wird, und
- Ausgabe der berechneten Koordinaten als Messergebnis der Zustandsgrößen für den Körper, dessen körpereigenes Koordinatensystem als Bezugskoordinatensystem der Berechnung gewählt wurde.

EP 1 270 410 A2

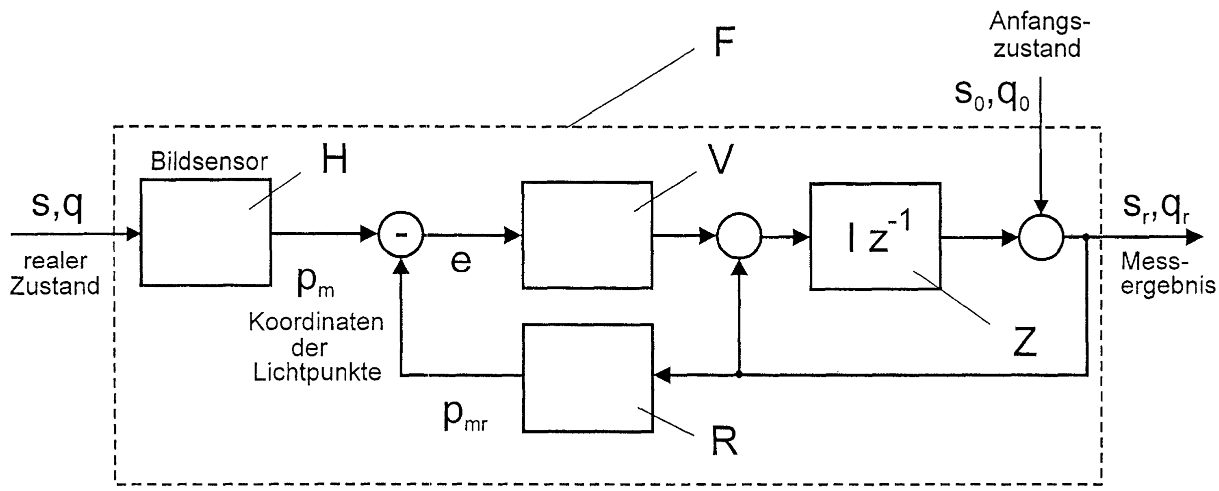
F
Anfangs-
zustand
$s_0, q_0$
Bildsensor
H
V
s,q
realer
Zustand
$p_m$
e
$I z^{-1}$
$s_r, q_r$
Mess-
ergebnis
Koordinaten
der
Lichtpunkte
Z
$p_{mr}$
R

Fig. 3

## Beschreibung

Die Erfindung betrifft ein Verfahren zum Bestimmen der Zustandsgrößen, wie relativer Position und Lage, eines bewegten starren Körpers im Raum, insbesondere für eine relative Annäherungsbewegung an einen anderen Körper. Sie wird vorzugsweise in der Raumfahrttechnik für Rendezvous- und Docking-Sensoren und in der Robotertechnik für Orientierungs- und Montageaufgaben angewendet.

Bekannte Messanordnungen beleuchten mit Hilfe einer Laserquelle, die sich unmittelbar in der Nähe einer Videokamera befindet, einen Zielkörper (Target), der an definierten Punkten Retroreflektoren (90°-Tripelspiegel) aufweist. Anstelle eines Targets mit Retroreflektoren, die von einer Laserquelle in unmittelbarer Nähe der Videokamera beleuchtet werden, sind auch selbstleuchtende Targets bekannt, wodurch sich die Laserquelle in der Nähe der Videokamera erübrigt.

Die Lichtpunkte des Targets, die in ihrer Solllage für eine ideale Annäherungsbewegung nicht sämtlich innerhalb einer Ebene liegen, werden auf der Empfängermatrix einer Videokamera in einer Ebene (Empfängerebene) abgebildet. Die Koordinaten der Lichtpunkte in der Empfängerebene werden für die weitere Auswertung bestimmt. Wegen der geforderten hohen Auflösung der optischen Abbildung und der genauen Extraktion der Koordinaten der Lichtpunkte wird eine solche Anordnung häufig auch Videometer genannt. Aus den gemessene Lichtpunktkoordinaten lassen sich dann nach unterschiedlichen Methoden die Zustandsgrößen (Positionsvektor und Lagevektor) der Kamera und damit eines Körpers, auf dem die Kamera montiert ist, in Bezug auf das Target oder die Zustandsgrößen des Targets in Bezug auf die Kamera bestimmen.

Im US-Patent 5,734,736 wird ein autonomes Rendezvous- und Docking-System sowie ein Verfahren dafür, bei dem die relative Position zwischen zwei Raumschiffen auf Basis der Lage eines reflektierenden Targets, das auf dem Zielraumschiff angebracht ist, bestimmt wird. Die Target-Reflexionen werden durch Intensität, Form, Größe und Lagebeziehung von anderen Lichtpunkten extrahiert. Das geschieht in erster Linie durch eine anspruchsvolle Bildverarbeitung, bei der das Target mit zwei verschiedenen Wellenlängen beleuchtet und mit zwei unterschiedlichen CCD-Kameras entsprechender Empfindlichkeit für die unterschiedlichen Wellenlängen aufgenommen wird. Aus den zwei unterschiedlichen, simultan aufgenommenen Bildern wird dann ein Differenzbild erzeugt sowie ein geeigneter Fangalgorithmus für die aufgefundenen Target-Lichtpunkte zur Nachführung der Kamera verwendet, um die Lichtpunkte des Targets im nächsten abgetasteten Bild möglichst mittig wiederzufinden.

Die Parameter der sechs Freiheitsgrade (Positionsvektoren x, y, z; Roll-, Nick- und Gierwinkel) werden dabei in einer 1. Näherung abgeleitet auf Basis der bekannten Target-Geometrie, der optischen Übertragungsfunktion der Kamera und der Intensität der Mittenpixel der abgebildeten Target-Lichtflecken. Daraus resultiert ein nichtlineares Gleichungssystem für die Raumkoordinaten, die numerisch mit der mehrdimensionalen Newton-Raphson-Methode gelöst werden, um daraus schließlich alle sechs Zustandsvektoren (x, y, z, Roll-, Nick- und Gierwinkel) abzuleiten. Aus den Zustandsvektoren des vorhergehenden Bildes und des aktuellen Bildes kann dann eine relative Target-Bewegung zur Bestimmung eines nächsten Suchfensters für die beiden CCD-Kameras abgeleitet werden.

Der Nachteil dieser Lösung besteht darin, dass im Grunde genommen nur rekursive Einzelschätzungen der Zustandsvektoren aus den aufgenommenen Paaren von Einzelbildern der CCD-Kameras erfolgen und das Ergebnis aufeinanderfolgender Abtastungen ausschließlich für die Ableitung des nächsten Suchfensters verwendet wird. Weiterhin ist wegen des nichtlinearen Zusammenhangs zwischen den Zustandsgrößen einerseits sowie den Koordinaten der Lichtpunkte auf den optoelektronischen Matrix-Bildwandlern andererseits die genaue Bestimmung der Zustandsgrößen über eine rekursive Lösung eines nichtlinearen Gleichungssystem höherer Ordnung (wegen der Bearbeitung einer Vielzahl komplizierter Operationen) sehr aufwendig und für Berechnungen in Echtzeit ungünstig. Die Rekursionsmethode reagiert außerdem sehr empfindlich auf Störungen durch Rauschen der Lichtpunkte (und damit auf Abweichungen der Lichtpunktkoordinaten).

Der Erfindung liegt die Aufgabe zugrunde, eine neue Möglichkeit zur Bestimmung der Zustandsgrößen eines bewegten Körpers im Raum zu finden, die unter Verwendung eines Bildsensors auf einem Körper und einer definierten Targetkonfiguration auf einem anderen Körper bei geringem Hardware- und Software-Aufwand mit einfachen mathematischen Operationen eine Echtzeit-Bestimmung der Positions- und Lagekoordinaten des einen Körpers relativ zum anderen Körper gestattet.

Die Aufgabe wird bei einem Verfahren zur Bestimmung der Zustandsgrößen, wie relativer Position und Lage, eines bewegten starren Körpers im Raum, insbesondere für eine Bewegung der relativen Annäherung an einen anderen Körper, unter Verwendung von Messdaten, die durch einen an dem einen Körper befindlichen Bildsensor bereitgestellt werden, wobei die Messdaten von Leuchtpunkten eines Targets, dessen Konfiguration am anderen Körper, bezogen auf dessen körpereigenes Koordinatensystem, bekannt und so gewählt ist, dass wenigstens einer der Leuchtpunkte nicht innerhalb einer zur Annäherungsbewegung im Wesentlichen orthogonalen Ebene liegt, erfindungsgemäß durch folgende Schritte gelöst:

- Aufnahme von Lichtpunkten als Abbildung einer mindestens vier Leuchtpunkte umfassenden, dreidimensionalen

Targetkonfiguration mittels des Bildsensors, wobei in der Empfängerebene des Bildsensors eine zweidimensionale Projektion der dreidimensionalen Targetkonfiguration abgebildet wird,

- Bestimmung der x-y-Koordinaten von in die Empfängerebene projizierten Lichtpunkten als Messdaten in Form von projizierten Bildpunktvektoren,
- Berechnung der Zustandsgrößen des bewegten Körpers mittels eines Folgeregelkreises, der die Messdaten von jeweils in einer Bildaufnahme projizierten Lichtpunkten der Targetkonfiguration unter Nutzung einer Umkehrfunktion zum gewünschten Ausgangssignal der Zustandsgrößen des bewegten Körpers verarbeitet, wobei die Umkehrfunktion mittels einer mathematisch modellierten Abbildungsfunktion des Bildsensors, die den Zusammenhang zwischen den Zustandsgrößen von Position und Lage und den Koordinaten der Lichtpunkte in der Empfängerebene des Bildsensors für die gewählte Targetkonfiguration beschreibt, in einer Rückführung des Regelkreises realisiert wird, und
- Ausgabe der berechneten Koordinaten als Messergebnis der Zustandsgrößen für den Körper, dessen körpereigenes Koordinatensystem als Bezugskoordinatensystem der Berechnung gewählt wurde.

Vorzugsweise arbeitet der Folgeregelkreis so, dass ausgehend von geschätzten Anfangswerten oder von Ergebnissen von zuvor berechneten Koordinaten für Position und Lage der Targetkonfiguration ein zu den Bildsensor-Messdaten der Targetkonfiguration ähnlicher Datensatz von berechneten Bildpunktvektoren mit Hilfe eines in der Rückführung des Folgeregelkreises implementierten Rückführoperators auf Basis der bekannten optischen Abbildungsfunktion für die Empfängerebene errechnet wird, die berechneten Bildpunktvektoren mit denen der projizierten Bildpunktvektoren der tatsächlich aufgenommenen Lichtpunkte verglichen werden und im Ergebnis des Vergleichs ein Fehlervektor zur Korrektur der zuvor geschätzten oder berechneten Zustandsgrößen verwendet wird.

Im Folgeregelkreis wird zweckmäßig der Fehlervektor mit einem linearen Übertragungsglied in Form einer Verstärkungsmatrix gewichtet, wobei die Verstärkungsmatrix auf Basis einer Empfindlichkeitsmatrix, die die Veränderung der Lage der Lichtpunkte in der Empfängerebene des Bildsensors in Abhängigkeit von der Änderung der Position und Lage der Targetkonfiguration beschreibt und von der gewählten Targetkonfiguration sowie von der Entfernung zwischen Bildsensor und Target abhängt, gebildet wird.

Die Verstärkungsmatrix wird dabei vorzugsweise zunächst für eine bestimmte Entfernung berechnet und während des laufenden Regelungsprozesses des Folgereglers in Abhängigkeit von der aktuell ermittelten Entfernung adaptiert.

Zur Vermeidung einer Überempfindlichkeit gegen kleine Änderungen ist es vorteilhaft, die Verstärkungsmatrix mit einem skalaren Faktor, der geringfügig kleiner als Eins ist, zu beaufschlagen. Der skalare Faktor liegt vorzugsweise in der Größenordnung von 0,9.

Im Folgeregelkreis (vorzugsweise in Form eines diskontinuierlichen Regelkreises = Abtastregelkreis) wird nach Anwendung der Verstärkungsmatrix vorteilhaft ein Laufzeitglied oder ein Zwischenspeicher für eine Iteration der errechneten Zustandsvektoren verwendet auf Basis der Verbesserung des Ergebnisses durch Hinzunahme weiterer Fehlervektoren, die aus dem Vergleich von fortgesetzt neu berechneten Zustandsvektoren mit demselben aufgenommenen Bildpunktvektor erzeugt und mit der Verstärkungsmatrix gewichtet werden.

Der Folgeregelkreis bricht zweckmäßig bei Unterschreiten eines definierten Restfehlers des Fehlervektors die Iteration ab und gibt das Ergebnis als Messwert der Zustandsgrößen des bewegten Körpers aus.

Dieser Zustand kann vorteilhaft ebenfalls erreicht werden, wenn im Folgeregelkreis die Bestimmung der Zustandsgrößen nach einer vorgewählten definierten Anzahl von Iterationen (Takten) des Regelkreises, z.B. sieben Iterationen, abgebrochen wird.

Zur Verringerung des Rechenaufwands kann der mit der Verstärkungsmatrix versehene Bewertungspfad im Folgeregelkreis für die Iteration der Positionsvektoren und der Lagevektoren getrennt genutzt werden, wobei für Iterationszyklen von Positionsvektoren und Lagevektoren (vorgegebene Anzahl von Iterationstakten = Zyklus oder Sequenz) jeweils unterschiedliche reduzierte Verstärkungsmatrizen, die Teilmatrizen der vollständigen Verstärkungsmatrix sind, verwendet werden und die nicht verarbeitete Zustandsgröße jeweils unverändert dem Rückführoperator zugeführt wird.

Die Iterationszyklen für Positionsvektoren und Lagevektoren werden zweckmäßig jeweils sequenziell umgeschaltet, wobei die Anzahl der separaten Iterationszyklen für die Positionsvektoren und die Lagevektoren nicht zwingend regelmäßig wechseln.

Dabei ist es vorteilhaft, wenn zu Beginn der Annäherungsbewegung des bewegten Körpers die Iterationszyklen ausschließlich für die Positionsvektoren angewendet werden und erst in der Endphase der Annäherung die Iterationszyklen für die Lagevektoren zugeschaltet werden.

Die Iterationszyklen können aber auch bei unterschiedlicher Dauer der Sequenzen der Iterationen für Positionsvektoren und Lagevektoren regelmäßig umgeschaltet werden.

Das Erkennen der Leuchtpunkte, die in der Regel von Retroreflektoren herrühren oder aber auch selbstleuchtende Targetpunkte sein können, geschieht - ohne das dies der wesentliche Gegenstand der erfindungsgemäßen

Lösung ist - ebenfalls mit Hilfe einer Anfangsschätzung von Position und Lage, aus der die Lage der Lichtpunkte in der Empfängerebene des Bildsensors vorausberechnet wird. Ein Zeichenerkennungsalgorithmus, der gegenüber zulässigen Lageänderungen (Nicken, Gieren, Rollen) robust ist, stellt anhand der vorausberechneten Verteilung der Leuchtpunkte der Targetkonfiguration fest, welche Lichtpunkte auf dem optoelektronischen Matrix-Bildwandler (z.B. CCD) zu den Leuchtpunkten (z.B. Retroreflektoren) des Zielkörpers gehören und welche nicht.

Mit dem erfindungsgemäßen Auswerteverfahren ist es möglich, die Zustandsgrößen eines bewegten Körpers im Raum unter Verwendung eines Bildsensor auf einem Körper und einer definierten Targetkonfiguration auf einem anderen Körper zu bestimmen, wobei einfache mathematische Operationen mit geringem Hardware- und Software-Aufwand eine Echtzeit-Berechnung der Positions- und Lagekoordinaten eines bewegten Körpers relativ zu dem anderen Körper gestattet.

Die Erfindung soll nachstehend anhand von Ausführungsbeispielen näher erläutert werden. Die Zeichnungen zeigen:

Fig. 1: ein Prinzipschema der Abbildung eines Targetpunktes in die Empfängerebene einer Videokamera,

Fig. 2: ein Schema der Signalübertragung zur erfindungsgemäßen Berechnung der Zustandsgrößen,

Fig. 3: das erfindungsgemäße Prinzip des Folgeregelkreises bei der Bestimmung des Positions- und des Lagevektors s und q im Kamera-Koordinatensystem

Fig. 4: das Prinzip der Bestimmung des Positionsvektors s bei festen Lageparametern,

Fig. 5: das Prinzip der Bestimmung des Lagevektors q bei festen Positionsparametern

Fig. 6: eine Prinzipdarstellung einer erfindungsgemäßen Iterationsschleife,

Fig. 7 eine Ergebnisdarstellung des erfindungsgemäßen Messprozesses.

Ausgegangen wird von dem bekannten Zusammenhang zwischen Kameraposition c bzw. s (je nach Wahl des Bezugskoordinatensystems), relativer Lage q des Zielkörpers gegenüber dem Bildsensor, Bildabstand (Brennweite) des Bildsensors (im Folgenden auch: Kamera), den Targetvektoren $t_i$ des Zielkörpers aus Leuchtpunkten $T_i$ (Targetkonfiguration K) und den Bildvektoren $p_{im}$ (Orte) der Lichtpunkte $L_i$ auf dem Bildwandler (jeweils mit Index i = 1, ..., n).

Als Leuchtpunkte $T_i$ werden im Folgenden - ohne Beschränkung der Allgemeinheit - die bei großen Entfernungen (wie z.B. in der Raumfahrt) vorzugsweise eingesetzten Retroreflektoren (90°-Winkelspiegel) angenommen.

Die Abbildung der Retroreflektoren $T_i$ in die Empfängerebene E des Bildsensors lässt sich mit einer Abbildungsfunktion (Kamerafunktion) mathematisch beschreiben. Dabei ist es gleichgültig, ob man das Target-Koordinatensystem (x y z) oder das Kamera-Koordinatensystem (x* y* z*) als Referenzkoordinatensystem für das Messergebnis wählt.

In der Regel werden Positionsvektoren c, gemessen im Koordinatensystem des Targets, oder - wie in Fig. 1 darstellt - Positionsvektoren s, gemessen im Koordinatensystem der Kamera, in kartesischen Koordinaten angegeben und die relative Lage als Lagevektor q in Quaternionen, aus denen sich die sogenannten Eulerwinkel berechnen lassen, angegeben. Die Positions- und Lagevektoren sind üblicherweise Spaltenvektoren und lassen sich durch die Transposition T als Zeilenvektoren darstellen:

$$c = (x_c\ y_c\ z_c)^T, \qquad s = (x_s\ y_s\ z_s)^T; \qquad q = (q_1\ q_2\ q_3\ q_4)^T. \qquad (1)$$

Der Ursprung des Kamerakoordinatensystems (x* y* z*) liegt - gemäß Fig. 1 - innerhalb der Linse (Schnittpunkt der Hauptebene mit der optischen Achse) des Bildsensors (Kamera), und der optoelektronische Bildwandler liegt als Empfängerebene E in Form einer x*y*-Ebene im Abstand z*= d vom Ursprung des Kamera-Koordinatensystems (x* y* z*) entfernt.

Für den Ursprung des Target-Koordinatensystems (x y z) eignet sich ein Punkt innerhalb der räumlichen Targetkonfiguration K der Retroreflektoren $T_i$, z.B. der Mittelpunkt einer ebenen Figur, deren Eckpunkte von mindestens drei (hier: vier) in einer Ebene liegenden Retroreflektoren $T_i$ gebildet werden, oder Lotfußpunkt von einem außerhalb einer solchen Ebene liegenden Retroreflektors $T_1$ auf der Ebene.

In Fig. 1 sind beide letztgenannten Vorgaben in einem räumlichen Gebilde, der regelmäßigen (hier: quadratischen) Pyramide vereinigt, wobei die so definierte Targetkonfiguration K mit ihrer Grundfläche im Wesentlichen senkrecht zur erwarteten (bzw. beabsichtigten) Richtung der Annäherungsbewegung zwischen dem die Kamera und dem die Targetkonfiguration K tragenden Körper ausgerichtet ist.

Es gibt grundsätzlich zwei Arten der geometrischen Lagedarstellung zwischen den beiden Koordinatensystemen. Beim Target-Referenz-System wird für die Darstellung von Position und Lage des Körpers auf dem die Kamera montiert ist, das Target-Koordinatensystem zugrunde gelegt und die Positionskoordinaten im Positionsvektor c zusammengefasst.

Beim Kamera-Referenz-System - wie Fig. 1 gewählt - wird für die Darstellung von Position und Lage des Körpers, auf dem das Target montiert ist, das Kamera-Koordinatensystem zugrunde gelegt.

Anstelle der hier verwendeten kartesischen Koordinaten können auch andere Koordinatensysteme benutzt werden. Beispielsweise lassen sich problemlos Kugelkoordinaten verwenden.

Unter Verwendung des Kamera-Referenzsystems gemäß Fig. 1 gilt für die Abbildung eines zur Erhaltung der Übersichtlichkeit ausgewählten Retroreflektors $t_1 = (x_1\ y_1\ z_1)^T$ mit dem Abstandsvektor $v = s + R_s\, t_1$ demnach für den Bildvektor des Abstandsvektors

$$p_1^* = - s - R_s\, t_1, \tag{2}$$

$$p_{1m} = d\, p_1^*/z_1^*, \qquad z_1^* = (0\ 0\ 1)\, p_1^*. \tag{3}$$

Weiterhin geben $x_1$, $y_1$ und $z_1$ die Lage des Retroreflektors $T_1$ durch den Targetvektor $t_1$ im Target-Koordinatensystem (x y z) und $R_s$ die Rotation des Vektors $t_1$ bezüglich des Kamera-Koordinatensytems (x* y* z*) an.

Gleichung (2) besagt, dass der Abstandsvektor v, der den Abstand zwischen dem Retroreflektor $T_1$ und dem Ursprung des Kamera-Koordinatensystems (x* y* z*) angibt, geradlinig in das Kamera-Koordinatensystem überführt wird und den gleichgroßen, aber entgegengesetzt gerichteten Bildvektor $p_1^*$ bildet. Auf die Stelle, wo der Bildvektor $p_1^*$ die Empfängerebene E des optoelektronischen Matrixbildwandlers durchstößt, zeigt der projizierte Bildpunktvektor $p_{1m}$ gemäß Gleichung (3) und enthält somit die Koordinaten des vom Retroreflektor $T_1$ abgebildeten Lichtpunktes $L_1$. Die Größe $d/z_i^*$ stellt einen Abbildungsfaktor dar, der für jeden Lichtpunkt $L_i$, insbesondere bei kleinen Entfernungen zwischen Kamera und Targetkonfiguration K, unterschiedlich sein kann.

Die Gleichungen (2) und (3) gelten für alle übrigen Retroreflektoren $T_2$ bis $T_5$ analog. Sie lassen sich zur Vektorgleichung

$$p_m = H_s(s, q, d, t_1, \ldots t_5) \tag{4}$$

zusammenfassen.

Der resultierende Bildpunktvektor $p_m$ (Zusammenfassung aller projizierten Bildpunktvektoren $p_{im}$) enthält alle Daten über die Orte der Lichtpunkte $L_i$ in der Empfängerbildebene E.

Gleichung (2) überführt den Targetvektor $t_1$ in den Bildvektor $p_1^*$, wobei die Translation und die Rotation zwischen den beiden Koordinatensystemen (x y z) und (x* y* z*) berücksichtigt wird. Die Rotation wird dabei im Kamera-Koordinatensystem (x* y* z*) durch die Lagematrix

$$R_s = \begin{bmatrix} q_1^2-q_2^2-q_3^2+q_4^2 & 2\,(q_1q_2 + q_3q_4) & 2\,(q_1q_3 - q_2q_4) \\ 2\,(q_1q_2 - q_3q_4) & -q_1^2+q_2^2-q_3^2+q_4^2 & 2\,(q_2q_3 + q_1q_4) \\ 2\,(q_1q_3 + q_2q_4) & 2\,(q_2q_3 - q_1q_4) & -q_1^2-q_2^2+q_3^2+q_4^2 \end{bmatrix} \tag{5}$$

in Abhängigkeit von den Quaternionen $q_1$, $q_2$, $q_3$, $q_4$ angegeben. Gleichung (3) beschreibt, wie der Bildvektor $p_1^*$, der wegen der Länge $|v| \gg d$ die Empfängerebene E durchstößt, auf die Empfängerebene E verkürzt und somit der projizierte Bildpunktvektor $p_{1m}$ erzeugt wird. Gleichungen (2) und (3) sind nichtlineare Gleichungen bezüglich s und q.

Tabelle 1 stellt in Abhängigkeit von der Wahl des Bezugskoordinatensystems die möglichen Abbildungsfunktionen dar. Sie beschreiben die Abbildung der Retroreflektoren $T_i$ in die Empfängerebene E des Bildsensors (d.h. auf den optoelektronischen Matrixbildwandler, z.B. eine CCD-Matrix) in Abhängigkeit vom gewählten Bezugssystem.

In Tabelle 1 sind zu Gleichung (4) äquivalente Beziehungen verallgemeinert für n Retroreflektoren $T_i$ angegeben und aus Spalte 2 entnimmt man die entsprechende Beziehung, wenn man das Ergebnis in Targetkoordinaten

erhalten möchte.

Tabelle 1:

| Darstellungen der optischen Abbildung | | |
|---|---|---|
| Referenzsystem | Target-Koordinatensystem | Kamera-Koordinatensystem |
| Lagematrix | $R_c$ | $R_s$ |
| Positionsvektor | c | s |
| Vektordarstellung der optischen Abbildung | $p_i^* = R_c\,(c - t_i)$, i = 1, ... n,<br>$p_{im} = d\, p_i^*/z_i^*$,<br>$z_i^* = (0\ 0\ 1)\, p_i^*$ | $p_i^* = -s - R_s\, t_i$, i = 1, ... n,<br>$p_{im} = d\, p_i^*/z_i^*$,<br>$z_i^* = (0\ 0\ 1)\, p_i^*$ |
| formale Darstellung der Abbildungsfunktion | $p_m = H_c(c, q, d, t_1, ...t_n)$ | $p_m = H_s(s, q, d, t_1, ...t_n)$ |

Fig. 2 zeigt ein Schema der Signalübertragung zur Bestimmung der gewünschten Zustandsgrößen. Die Kamera (in Fig. 1 nur als Empfängerebene E stilisiert dargestellt) erzeugt in Abhängigkeit von den realen Zustandsgrößen s und q für die aufgenommene Targetkonfiguration K einen projizierten Bildpunktvektor $p_m$ , aus dem durch die nachfolgende Datenverarbeitung wieder die Zustandsgrößen, die dem projizierten Bildpunktvektor $p_m$ zugrunde liegen, ermittelt werden sollen.

Das Problem der möglichst rationellen Bestimmung von Position und Lage aus der Abbildung eines Bildsensors ist in Fig. 2 prinzipiell dargestellt, indem zu einer Abbildungsfunktion $H_s$ (oder nach Tabelle 1 ebenso $H_c$) die Umkehrfunktion $H_s^{-1}$ (oder $H_c^{-1}$) bestimmt wird. Dafür wird erfindungsgemäß ein Regelkreis verwendet.

Man löst dieses Regelungsproblem durch eine Rückkopplungsschleife in einem Folgeregelkreis. Die Targetvektoren $t_1$, ..., $t_5$ sind für die Datenverarbeitung bekannt. Die Abbildungsfunktionen $H_s$ oder $H_c$ (im Weiteren nur noch Abbildungsfunktion H) lassen sich leicht implementieren und ihre Umkehrungen $H_s^{-1}$ (oder $H_c^{-1}$) ebenfalls. Die Anzahl der Variablen in diesem Regelkreis hängt von der Zahl der Retroreflektoren $T_i$ ab und beträgt 10 bei fünf Retroreflektoren $T_1$ bis $T_5$ (allgemein: doppelt so viele Variablen wie Retroreflektoren $T_i$). Die Umkehrfunktion $H^{-1}$ wird gebildet, indem man die Abbildungsfunktion H in Form eines Rückführoperators R in die Rückführung eines Folgeregelkreises F einbindet.

In Fig. 3 ergibt sich dann folgender Messvorgang.

Zunächst wird der Anfangszustand $s_0$, $q_0$ bestimmt. Im Allgemeinen reicht es hier aus, von den Werten $x_s$ = 0, $y_s$ = 0, $z_s$ = - $r_s$ (r = geschätzte Entfernung zwischen Target und Kamera) sowie q, = 0, $q_2$ = 0, $q_3$ = 0, $q_4$ = 1 auszugehen. Manchmal ist es notwendig (z.B. bei großen Rollwinkeln), einen (von Null verschiedenen) Schätzwert für $q_3$ einzugeben.

Bei fortgesetzter Messung wird dann das zuletzt errechnete Messergebnis $s_r$, $q_r$ als Anfangswert für den nächsten Takt verwendet. Wenn der Anfangswert eingegeben wurde, wird mit Hilfe der implementierten Abbildungsfunktion H im Rückführoperator R ein Schätzwertvektor $p_{mr}$ der Koordinaten der Lichtpunkte berechnet. Gleichzeitig werden die Koordinaten $p_m$ der Lichtpunkte auf der CCD ausgelesen. Der Block H repräsentiert die tatsächliche Abbildungsfunktion des Bildsensors (Kamera). Der Vergleich der gemessenen und der berechneten Lichtpunktkoordinaten gibt einen Fehlervektor

$$e = p_m - p_{mr}. \tag{6}$$

Der Fehlervektor e wird mit einer Verstärkungsmatrix V verstärkt und zur Korrektur des Anfangszustandes bzw. des vorhergehenden Ergebnisses der Iteration verwendet. So können mehrere Umläufe notwendig sein, um genügend genaue Messergebnisse zu erhalten, d.h. den Fehlervektor ausreichend klein (bzw. gemäß dem Prinzip eines Folgereglers zu Null) werden zu lassen. Das Laufzeitglied Z, dargestellt als Block I $z^{-1}$, symbolisiert eine Speicherung des berechneten Ergebnisses über einen Takt, d.h. die Dauer eines Iterationstaktes. Das Messergebnis $s_r$, $q_r$ wird dann pro Kamera-Auslesung nach einer Anzahl von Iterationstakten ausgegeben, wenn a) der Fehlervektor e eine akzeptable Restfehlergröße unterschritten hat oder b) aufgrund der vorgewählten Anzahl der Takte gesichert ist, dass der Fehlervektor e hinreichend klein ist. Das bedeutet, dass Kamera-Auslesung und Iterationszyklus so synchronisiert werden müssen, dass in einem Abtasttakt der Kamera ein Zyklus mit k Iterationstakten abläuft.

In Fig. 7 wurde die Iteration beispielsweise mit 7 Takten vorgegeben. Hier ist der Verlauf der Positionsgrößen $x_s$, $y_s$ und $z_s$ und der Lagegrößen $q_1$, $q_2$, $q_3$ und $q_4$ in Abhängigkeit von der Zahl der Iterationen (Takte). Man sieht, dass bereits nach drei Iterationen die berechneten Zustandsgrößen mit den tatsächlichen Zustandsgrößen praktisch übereinstimmen.

Die Funktionsweise lässt sich in dem Programmablaufplan von Fig. 6 zusammenfassen. Er gibt die Arbeitsweise für einen Zyklus wieder. Das neue Messergebnis, das als Ergebnisvektor aus Position $s_r$ und Lage $q_r$ besteht, wird nach Gleichung (6) durch den Fehlervektor e, der von den aktuell berechneten ("Anfangs-") Werten $s_r$, $q_r$ abhängt, berechnet. Dabei bedeutet $p_{mr}(s_r,q_r)$, dass aus dem vorliegenden Ergebnis $s_r$, $q_r$ mit Hilfe der bekannten Abbildungsfunktion H = R der zugehörige Bildpunktvektor $p_{mr}$ bestimmt wird. Der Fehlervektor e wird mit der Verstärkungsmatrix V multipliziert. Sie bewertet die Fehlerkomponenten in ihrer Wirkung auf die Korrektur des Positions- und Lagevektors $s_r$, $q_r$.

Das Quaternion $q_4$ des Lagevektors wird nach jedem Iterationstakt aus $q_1$, $q_2$, $q_3$ berechnet, um die Nebenbedingung

$$q_1^2 + q_2^2 + q_3^2 + q_4^2 = 1 \tag{7}$$

zu erfüllen. Zur Definition der Quaternionen und der obigen Bedingung sind von J. R. WERTZ in: Spacecraft Attitude Determination and Control, Kluwer Academic Publishers, Dordrecht, Boston, London, 1997, ausführliche Erläuterungen enthalten, die hier zugrunde gelegt wurden.

Gleiche Voraussetzungen und Ausgestaltungen des Verfahrens eignet sich auch für ein Target-Bezugsystem, wobei H, R und V dann entsprechend zu verändern sind.

Entscheidend für die Funktionsweise des Systems ist die Bestimmung der Verstärkungsmatrix V. Sie beschreibt, welchen Einfluss eine Abweichung der Lichtpunktkoordinaten auf die Positions- und Lagegrößen hat. Man erhält die Verstärkungsmatrix V aus einer Empfindlichkeitsmatrix S der Abbildungsfunktion H ($H_s$ bzw. $H_c$). Sie gibt an, wie sich kleine Positions- und Lageänderungen auf die Koordinaten der Lichtpunkte $L_i$ in der Empfängerebene E auswirken. Eine solche Empfindlichkeitsmatrix ist von der Entfernung r = |s| zwischen Targetkonfiguration K und Kamera abhängig und wie folgt definiert:

$$S = \begin{bmatrix} \partial p_{1mx}/\partial x_s & \partial p_{1mx}/\partial y_s & \partial p_{1mx}/\partial z_s & \partial p_{1mx}/\partial q_1 & \partial p_{1mx}/\partial q_2 & \partial p_{1mx}/\partial q_3 \\ \partial p_{1my}/\partial x_s & \partial p_{1my}/\partial y_s & \partial p_{1my}/\partial z_s & \partial p_{1my}/\partial q_1 & \partial p_{1my}/\partial q_2 & \partial p_{1my}/\partial q_3 \\ \partial p_{2mx}/\partial x_s & \partial p_{2mx}/\partial y_s & \partial p_{2mx}/\partial z_s & \partial p_{2mx}/\partial q_1 & \partial p_{2mx}/\partial q_2 & \partial p_{2mx}/\partial q_3 \\ \partial p_{2my}/\partial x_s & \partial p_{2my}/\partial y_s & \partial p_{2my}/\partial z_s & \partial p_{2my}/\partial q_1 & \partial p_{2my}/\partial q_2 & \partial p_{2my}/\partial q_3 \\ \vdots & \vdots & \vdots & \vdots & \vdots & \vdots \\ \partial p_{5mx}/\partial x_s & \partial p_{5mx}/\partial y_s & \partial p_{5mx}/\partial z_s & \partial p_{5mx}/\partial q_1 & \partial p_{5mx}/\partial q_2 & \partial p_{5mx}/\partial q_3 \\ \partial p_{5my}/\partial x_s & \partial p_{5my}/\partial y_s & \partial p_{5my}/\partial z_s & \partial p_{5my}/\partial q_1 & \partial p_{5my}/\partial q_2 & \partial p_{5my}/\partial q_3 \end{bmatrix} \tag{8}$$

In Gleichung (8) bedeuten $p_{imx}$ und $p_{imy}$, i = 1,..., 5 die x,y-Koordinaten der Lichtpunkte $L_i$, die zum i-ten Retroreflektor $T_i$ gehören, auf dem Matrixbildwandler (in der Empfängerebene E) messbar sind und im Vektor $p_m$ zusammengefasst werden. Die Koordinaten $x_s$, $y_s$, $z_s$ geben die Position an und die Quaternionen $q_1$, $q_2$, $q_3$ die Lage (Nicken, Gieren, Rollen). Eine entsprechende Matrix kann man für die Position c bezogen auf das Target-Koordinatensystem definieren.

Wegen der Robustheit des Gesamtsystems reicht es im Allgemeinen aus, die Empfindlichkeitsmatrix S für einen mittleren Arbeitspunkt

$$x_s = 0, \quad y_s = 0, \quad z_s = -r, \quad q_1 = 0, \quad q_2 = 0, \quad q_3 = 0$$

zu berechnen. Die Elemente der Empfindlichkeitsmatrix S hängen von der Entfernung gemäß Tabelle 2 ab.

Tabelle 2:

| Einfluss der Entfernung r auf die Empfindlichkeitsmatrix | | |
|---|---|---|
| Empfindlichkeitsmatrix Elemente | bezüglich c, q | bezüglich s, q |
| der ersten Spalte | Division durch r | Division durch r |
| der zweiten Spalte | Division durch r | Division durch r |
| der dritten Spalte | Division durch $r^2$ | Division durch $r^2$ |

Tabelle 2: (fortgesetzt)

| Einfluss der Entfernung r auf die Empfindlichkeitsmatrix | | |
|---|---|---|
| Empfindlichkeitsmatrix Elemente | bezüglich c, q | bezüglich s, q |
| der vierten Spalte | keine Veränderung | Division durch r |
| der fünften Spalte | keine Veränderung | Division durch r |
| der sechsten Spalte | Division durch r | Division durch r |

Die Verstärkungsmatrix V ist die Pseudoinverse der Empfindlichkeitsmatrix S. Sie ist das Ergebnis der optimalen Auflösung eines überbestimmten linearen Gleichungssystems, da z. B. aus 10 Lichtpunktverschiebungen (d.h. den Verschiebungen von 5 Lichtpunkten $L_i$ in x- und y-Richtung) 6 Positions- und Lageänderungen zu berechnen sind. Wegen der Abhängigkeit der Empfindlichkeitsmatrix S von der Entfernung r ist die Verstärkungsmatrix V ebenfalls eine Funktion der Entfernung r. Hohe Verstärkungswerte für die einzelnen Komponenten ergeben sich bei großen Entfernungen r, da in diesem Fall die Abbildung in der Empfängerebene E klein ist. Es ist zweckmäßig, die Verstärkungsmatrix V möglichst gut an die vorhandene Entfernung r anzupassen. Durch Adaption der Verstärkungsmatrix V in Abhängigkeit von der Entfernung r erreicht man bei einer Annäherungsbewegung gleichbleibend gute Konvergenz. Auf geeignete Weise berechnet man die Verstärkungsmatrix V für eine bestimmte Entfernung r und ändert dann die Elemente der Matrix in Abhängigkeit von den durchgeführten Messungen.

Bei der angegebenen Targetkonfiguration K mit 5 Retroreflektoren $T_1$ bis $T_5$ ist die Verstärkungsmatrix V eine (6×10)-Matrix. Es erweist sich als zweckmäßig, die Verstärkungsmatrix V noch mit einer skalaren Konstante $b < 1$ (z. B. $b \approx 0{,}9$) zu multiplizieren, um eine Überempfindlichkeit des Systems gegenüber Störungen zu vermeiden.

Wenn man den Rückführoperator R in der Rückführung des Folgeregelkreises F zeitlich nacheinander einmal für die Positionsbestimmung und anschließend für die Lagebestimmung verwendet, lassen sich jeweils kleinere Verstärkungsmatrizen $V_l$ und $V_p$ verwenden, da sich die Zahl der im Foigeregelkreis umlaufenden Größen verringert.

Werden für die Positionsbestimmung nur die Signale der Retroreflektoren $T_1$ bis $T_4$ der Grundfläche der pyramidenförmigen Targetkonfiguration K verwendet, die - für dieses Beispiel gemäß Fig. 1 vorgewählt - in der xy-Ebene des Target-Koordinatensystems (xyz) liegen, so erhält man eine (3×8)-Matrix $V_p$, die ein Teil der kompletten (6×10) -Verstärkungsmatrix V ist. Damit ergibt sich ein Fehlervektor $e_p$ mit einer reduzierten Zahl von Komponenten, die der Verstärkungsmatrix $V_p$ angepasst ist. Der für diesen Fall gültige Folgeregelkreis F ist in Fig. 4 dargestellt. Der Folgeregelkreis F ist nur für den Positionsvektor s geschlossen. Für diese Arbeitsphase gelten die Anfangsbedingungen $s_{r0}$ und $q_{r0}$. Verändert wird dabei nur die Positionsparameter $s_r$. Die Lageparameter $q_{r0}$ bleiben dabei unverändert.

Analog zur Positionsbestimmung werden bei einer Arbeitsphase zur Lagebestimmung aus der kompletten Verstärkungsmatrix V nur die Zeilen und Spalten verwendet, in denen die Quaternionen $q_1$, $q_2$, $q_3$ vorkommen und die von Null verschiedene Elemente haben. Auf diese Weise erhält man für die Lagebestimmung bei der (gemäß Fig. 1 angenommenen) Targetkonfiguration K eine (3×6)-Matrix $V_l$. Entsprechend ist die Anzahl der Komponenten des Fehlervektors $e_l$ auf sechs reduziert. Nach jedem Iterationstakt wird das Quaternion $q_4$ aus $q_1$, $q_2$, $q_3$ mit Hilfe von Gleichung (7) berechnet und gespeichert, da der Folgeregelkreis F nur für die Quaternionen $q_1$, $q_2$, $q_3$ geschlossen ist.

Im praktischen Betrieb werden in zeitlicher Folge abwechselnd die an sich gleichen, aber unterschiedlich ausgestatteten Folgeregelkreise F nach Fig. 4 für die Positionsparameter $s_r$ und gemäß Fig. 5 für die Lageparameter $q_r$ verwendet.

Diese sequentielle Zerlegung des Abgleichvorganges hat folgende Vorteile.

Zum Einen bedeutet die Verkleinerung der zu verarbeitenden Matrizen eine bessere Transparenz des Verfahrens. Zum Anderen wird unter bestimmten Bedingungen (z.B. zu Beginn des Annäherungsmanövers) nur die Information über die Position $s_r$ gebraucht und man kann ganz gezielt auf die Berechnung des Lagevektors $q_r$ (Quaternionen) verzichten. Außerdem kann das erfindungsgemäße Verfahren bei einer sequenziellen Betriebsart mit anderen Verfahren zur Positions- und Lagebestimmung kombiniert werden.

Für die Erstakquisition oder eine Reakquisition (nach einem Verlieren des Targets) wird eine Mustererkennung (pattern recognition) benutzt. Sie dient dazu, die Positionen der Lichtpunkte $L_i$ der Retroreflektoren $T_i$ in der Empfängerebene E festzustellen, indem von einer Schätzung der Zustandsgrößen ausgegangen und für diese die Positionen der Lichtpunkte $L_i$ bei der gegebenen Targetkonfiguration K vorausberechnet werden. Die vorausberechneten Positionen der Lichtpunkte $L_i$ werden mit einer Unschärfe versehen, die zulässige Abweichungen der Schätzwerte von den exakten Werten der Zustandsgrößen berücksichtigen. Das so erzeugte Muster, das bei der verwendeten Pyramidenform der Targetkonfiguration K ein Quadrat mit fünf kleinen Suchfenstern an den Ecken und einem größeren Fenster um den Diagonalenschnittpunkt darstellt, dient der Suche nach dem von der Targetkonfiguration K in der Empfängerebene E abgebildeten Lichtpunktmuster. Dabei ist die Größe des Quadrats wieder von der Entfernung abhängig.

Beispiel 1

Dieses Beispiel verwendet die Darstellung von Fig. 3 und benutzt folgende Annahmen:

a) Es wird das Kamera-Referenz-System zugrunde gelegt, d.h. die Messergebnisse $s_r$, $q_r$ (Position und Lage) beziehen sich auf das Kamerakoordinatensystem (x* y* z*). Die negative z-Achse zeigt (gemäß Fig. 1) etwa in Richtung der Targetkonfiguration K.

b) Der Bildsensor ist eine Videometerkamera mit einen Bildabstand d = 50 mm.

c) Die Retroreflektoren $T_1$ bis $T_5$ befinden sich - wie in Fig. 1 dargestellt - auf den Eckpunkten einer geraden quadratischen Pyramide und sind in Richtung der Pyramidenspitze ausgerichtet. Im Mittelpunkt ihrer Grundfläche liegt der Koordinatenursprung des Target-Koordinatensystems (x y z). Seine z-Achse zeigt etwa in Richtung der Videometerkamera.

d) Die Targetvektoren $t_1$ bis $t_5$ haben die folgenden Werte:
$t_1 = (0.1\ 0\ 0)^T$, $t_2 = (0\ 0.1\ 0)^T$, $t_3 = (-0.1\ 0\ 0)^T$, $t_4 = (0\ -0.1\ 0)^T$, $t_s = (0\ 0\ 0.1)^T$.
Die in den Targetvektoren $t_1$ bis $t_5$ enthaltenen Entfernungen sind in Metern angegeben. Ihre reale Länge (Betrag der Targetvektoren) beträgt a = 0,1 m.

e) Die Position und Lage der Targetkonfiguration K aus der Sicht der Videometerkamera wird durch folgenden Datensatz beschrieben:

$$x_s = 1\text{ m},\qquad y_s = -1{,}5\text{ m},\qquad z_s = -5\text{ m},$$

$$q_1 = 0{,}1309,\qquad q_2 = 0{,}1309,\qquad q_3 = 0,\qquad q_4 = 0{,}9827 \qquad (9)$$

In diesem Fall misst der Bildsensor einen Bildpunktvektor (in mm):

$$p_m = (-11.0\quad 15.0\quad -10.0\quad 14.0\quad -9.0\quad 15.0\quad -10.0\quad 16.0\quad -9.9\quad 15.0)^T \qquad (10)$$

Da die z-Komponente bei allen 5 Lichtpunkten $L_i$ konstant gleich d = 0,05 m beträgt, wurde sie weggelassen.

Als Anfangswert für die Berechnung wird der Datensatz

$$x_s = 0,\qquad y_s = 0,\qquad z_s = -6\text{ m},\qquad q_1 = 0,\qquad q_2 = 0,\qquad q_3 = 0,\qquad q_4 = 1 \qquad (11)$$

verwendet.

Zur Berechnung der Verstärkungsmatrix V wird von der Empfindlichkeitsmatrix nach Gl. (8) auf der Grundlage des Kamera-Koordinatensystems (Tabelle 1, Spalte 3) als Bezugssystem ausgegangen. Die partiellen Ableitungen wurden für den Arbeitspunkt

$$x_s = 0,\ \ y_s = 0,\ \ z_s = -r,\quad q_1 = 0,\ \ q_2 = 0,\ \ q_3 = 0,\ \ q_4 = 1 \qquad (12)$$

berechnet und zur Empfindlichkeitsmatrix S nach Gl. (13) zusammengefasst.

Zu den Zeilen gehören die Größen $p_{1mx}$, $p_{1my}$, $p_{2mx}$, $p_{2my}$, ... $p_{5mx}$, $p_{5my}$.

Zu den Spalten gehören die Größen $x_5$, $y_s$, $z_s$, $q_1$, $q_2$, $q_3$.

$$S(r) = \begin{bmatrix} -d/r & 0 & -ad/r^2 & 0 & 0 & 0 \\ 0 & -d/r & 0 & 0 & 0 & 2ad/r \\ -d/r & 0 & 0 & 0 & 0 & -2ad/r \\ 0 & -d/r & -ad/r^2 & 0 & 0 & 0 \\ -d/r & 0 & ad/r^2 & 0 & 0 & 0 \\ 0 & -d/r & 0 & 0 & 0 & -2ad/r \\ -d/r & 0 & 0 & 0 & 0 & 2ad/r \\ 0 & -d/r & ad/r^2 & 0 & 0 & 0 \\ -d/(r-a) & 0 & 0 & 0 & 2ad/(r-a) & 0 \\ 0 & -d/(r-a) & 0 & -2ad/(r-a) & 0 & 0 \end{bmatrix} \quad (13)$$

Für r = 5 m erhält man beispielsweise die folgenden Zahlenwerte:

$$S(5) = \begin{bmatrix} -0.0100 & 0 & -0.0002 & 0 & 0 & 0.0000 \\ 0 & -0.0100 & 0 & 0 & 0 & 0.0020 \\ -0.0100 & 0 & 0 & 0 & 0 & -0.0020 \\ 0 & -0.0100 & -0.0002 & 0 & 0 & 0.0000 \\ -0.0100 & 0 & 0.0002 & 0 & 0 & -0.0000 \\ 0 & -0.0100 & 0 & 0 & 0 & -0.0020 \\ -0.0100 & 0 & 0 & 0 & 0 & 0.0020 \\ 0 & -0.0100 & 0.0002 & 0 & 0 & -0.0000 \\ -0.0102 & 0 & 0 & 0 & 0.0020 & 0 \\ 0 & -0.0102 & 0 & -0.0020 & 0 & 0 \end{bmatrix}. \quad (14)$$

Man erhält die Verstärkungsmatrix V als Pseudoinverse von S(r).

$$V(r) = \begin{bmatrix} -A & 0 & -A & 0 & -A & 0 & -A & 0 & 0 & 0 \\ 0 & -A & 0 & -A & 0 & -A & 0 & -A & 0 & 0 \\ -B & 0 & 0 & -B & B & 0 & 0 & B & 0 & 0 \\ 0 & C & 0 & C & 0 & C & 0 & C & 0 & -D \\ -C & 0 & -C & 0 & -C & 0 & -C & 0 & D & 0 \\ 0 & C & -C & 0 & 0 & -C & C & 0 & 0 & 0 \end{bmatrix} \quad (15)$$

mit

$$A(r) = r/(4d), \qquad B(r) = r^2/(4ad), \qquad C(r) = r/(8ad), \qquad D(r) = (r - a)/(2ad) \quad (16)$$

Für a = 0,1 m, d = 0,05 m und r = 5 m nehmen A, B, C, D folgende Werte an:

$$A(5) = 25; \qquad B(5) = 1250; \qquad C(5) = 125\ m^{-1}; \qquad D(5) = 490\ m^{-1}. \quad (17)$$

Das Verfahren nach Fig. 3 besteht aus folgenden Schritten:

- Bildaufnahme von der Targetkonfiguration K mit dem Bildsensor (Videometerkamera);
- Auslesen des Bildpunktvektors $p_m$, bezogen auf die Empfängerebene E;
- Berechnung eines geschätzten Bildpunktvektors $p_{mr}$ aus einem Anfangswertvektor $s_0$, $q_0$ über die Abbildungsfunktion H (hier: $H_s$ aus Spalte 3 der Tabelle 1)

- Ermitteln eines Fehlervektors e als Differenz zwischen gemessenen und berechneten (geschätzten) Bildpunktvektoren $e = p_m - p_{mr}$ und Multiplizieren mit der Verstärkungsmatrix V und einem skalaren Wert b = 0,9;
- Addition dieses Ergebnisses zum Anfangswertvektor $s_0$, $q_0$ bzw. zu den vorher gebildeten Schätzwerten der Zustandskoordinaten $s_r$, $q_r$;
- Weiterführen der Iteration bis der Fehlervektor e einen bestimmten Restfehler nicht mehr überschreitet;
- Ausgeben des Ergebnisses $s_r$, $q_r$ als Messwerte der Zustandskoordinaten s, q

Das Ergebnis eines solchen Iterationsprozesses zeigt Fig. 7 mit den Werten der nachfolgenden Tabelle 3.

Tabelle 3:

| Werte eines typischen Iterationsprozesses für Position und Lage | | | | | | |
|---|---|---|---|---|---|---|
| Ergebnisse der Iteration: $x_s$, $y_s$, $z_s$ in Metern, $q_1$, $q_2$, $q_3$, $q_4$ | | | | | | |
| Startvektor | 1. | 2. | 3. | 4. | 5. | 6. Iteration |
| 0 | 0.9002 | 1.0082 | 0.9971 | 1.0000 | 0.9998 | 1.0000 |
| 0 | - 1.3503 | - 1.5123 | - 1.4956 | - 1.5000 | - 1.4998 | - 1.5000 |
| - 6 | - 5.1147 | - 4.9793 | - 5.0015 | - 4.9991 | - 5.0000 | - 5.0000 |
| 0 | 0.1263 | 0.1316 | 0.1305 | 0.1309 | 0.1309 | 0.1309 |
| 0 | 0.1231 | 0.1326 | 0.1310 | 0.1309 | 0.1309 | 0.1309 |
| 0 | 0.0058 | 0.0020 | 0.0001 | 0.0000 | 0.0000 | 0.0000 |
| 1 | 0.9843 | 0.9824 | 0.9828 | 0.9827 | 0.9827 | 0.9827 |

Die Ergebnisse dieses Ausführungsbeispiels zeigen, dass

- die Konvergenz zur Bestimmung des genauen Wertes sehr rasch erfolgt,
- bei der Vorgabe der Entfernung r ein möglichst genauer Wert nützlich ist und
- für die Berechnung der Empfindlichkeits- und Verstärkungsmatrizen ein Arbeitspunkt

$$x_s = 0,\quad y_s = 0,\quad z_s = -r,\qquad q_1 = 0,\quad q_2 = 0,\quad q_3 = 0,\quad q_4 = 1$$

bei einem Gesichtsfeld eines Normalobjektives ausreichend ist.

Ähnliche Ergebnisse erhält man, wenn man für das Verfahren das Target-Koordinatensystem als Bezugssystem auswählt.

Beispiel 2: Getrennte Bestimmung von Position und Lage

Es werden dieselben Vorbedingungen und ähnliche Daten wie im Beispiel 1 verwendet. Zunächst erfolgt die Positionsbestimmung. Die gültige Verstärkungsmatrix $V_p$ wird für den bereits oben angegebenen Arbeitspunkt

$$x_s = 0,\quad y_s = 0,\quad z_s = -r,\qquad q_1 = 0,\quad q_2 = 0,\quad q_3 = 0,\quad q_4 = 1$$

über die Empfindlichkeitsmatrix $S_p(r)$ berechnet. Zu den Zeilen der Matrix $S_p(r)$ gehören die Größen $p_{1mx}$, $p_{1my}$, $p_{2mx}$, $p_{2my}$, ... $p_{4mx}$, $p_{4my}$. Zu den Spalten gehören die Größen $x_s$, $y_s$, $z_s$.

Man erhält $S_p(r)$

$$S_P(r) = \begin{bmatrix} -d/r & 0 & -a\,d/r^2 \\ 0 & -d/r & 0 \\ -d/r & 0 & 0 \\ 0 & -d/r & -a\,d/r^2 \\ -d/r & 0 & a\,d/r^2 \\ 0 & -d/r & 0 \\ -d/r & 0 & 0 \\ 0 & -d/r & a\,d/r^2 \end{bmatrix} \qquad (18)$$

und daraus durch Bildung der pseudoinversen Matrix $V_p(r)$

$$V_P = \begin{bmatrix} -r/(4d) & 0 & -r/(4d) & 0 & -r/(4d) & 0 & -r/(4d) & 0 \\ 0 & -r/(4d) & 0 & -r/(4d) & 0 & -r/(4d) & 0 & -r/(4d) \\ -r^2/(4ad) & 0 & 0 & -r^2/(4ad) & r^2/(4ad) & 0 & 0 & -r^2/(4ad) \end{bmatrix}. \qquad (19)$$

Mit den konkreten Daten a = 0,1 m; d = 0,05 m; r = 5 m erhält man die Verstärkungsmatrix

$$V_P(5) = \begin{bmatrix} -25 & 0 & -25 & 0 & -25 & 0 & -25 & 0 \\ 0 & -25 & 0 & -25 & 0 & -25 & 0 & -25 \\ -1250 & 0 & 0 & -1250 & 1250 & 0 & 0 & 1250 \end{bmatrix}. \qquad (20)$$

Tabelle 4:

| Werte eines typischen Iterationsprozesses für die Positionsbestimmung | | | | | | |
|---|---|---|---|---|---|---|
| Ergebnisse der Iteration: $x_s$, $y_s$, $z_s$ in Metern, $q_1$, $q_2$, $q_3$, $q_4$ | | | | | | |
| Startvektor | 1. | 2. | 3. | 4. | 5. | 6. Iteration |
| 0 | 0.8999 | 1.0473 | 1.0231 | 1.0052 | 1.0007 | 1.0000 |
| 0 | - 1.3500 | - 1.5711 | - 1.5347 | - 1.5078 | - 1.5010 | - 1.5000 |
| -6 | - 5.3812 | - 5.0995 | - 5.0156 | - 5.0008 | - 4.9997 | - 5.0000 |
| 0 | 0 | 0 | 0 | 0 | 0 | 0 |
| 0 | 0 | 0 | 0 | 0 | 0 | 0 |
| 0 | 0 | 0 | 0 | 0 | 0 | 0 |
| 1 | 1 | 1 | 1 | 1 | 1 | 1 |

Mit den berechneten Positionsdaten kann nun die Lagebestimmung erfolgen. Die zugehörigen Empfindlichkeits- und Verstärkungsmatrizen für einen Arbeitspunkt nach Gl. (12) sind die folgenden:

$$S_I(r) = \begin{pmatrix} 0 & 0 & 2ad/r \\ 0 & 0 & -2ad/r \\ 0 & 0 & -2ad/r \\ 0 & 0 & 2ad/r \\ 0 & 2ad/(r-a) & 0 \\ -2ad/(r-a) & 0 & 0 \end{pmatrix} \quad (21)$$

$$V_I(r) = \begin{pmatrix} 0 & 0 & 0 & 0 & 0 & (a-r)/(2ad) \\ 0 & 0 & 0 & 0 & (r-a)/(2ad) & 0 \\ r/(8ad) & -r/(8ad) & -r/(8ad) & r/(8ad) & 0 & 0 \end{pmatrix} \quad (22)$$

Mit den konkreten Daten a = 0,1 m; d = 0,05 m; r = 5 m erhält man die Verstärkungsmatrix

$$V_I(5) = \begin{pmatrix} 0 & 0 & 0 & 0 & 0 & -490 \\ 0 & 0 & 0 & 0 & 490 & 0 \\ 125 & -125 & -125 & 125 & 0 & 0 \end{pmatrix}. \quad (23)$$

Die daraus resultierenden Ergebnisse einer Lagebestimmung mit dem Folgeregelkreis F sind in nachfolgender Tabelle 5 für einen Datensatz gemäß Gl. (9) (zuzüglich eines angewendeten Dämpfungsfaktors b = 0,9) dargestellt. Hier wird ersichtlich, dass Bewegungen des Nicken (Quaternion $q_1$) und Gierens (Quaternion $q_2$) zu einer sehr guten Konvergenz des erfindungsgemäßen Verfahren führen. Das zeigt sich in Tabelle 5 darin, dass das Quaternion $q_3$ (Zeile 6 von Tabelle 5) nach anfänglichem Schätz- bzw. Berechnungsfehler bereits in der dritten Iteration auf den korrekten Wert (Null) zurückkehrt. Die Quaternionen $q_1$ und $q_2$ (für die Nick- und Gierbewegung des bewegten Körpers) erreichen bereits in der vierten Iteration die vorgegebenen Werte.

Tabelle 5:

| Werte eines typischen Iterationsprozesses für die Lagebestimmung | | | | | | |
|---|---|---|---|---|---|---|
| Ergebnisse der Iteration: $x_s$, $y_s$, $z_s$ in Metern, $q_1$, $q_2$, $q_3$, $q_4$ | | | | | | |
| Startvektor | 1. | 2. | 3. | 4. | 5. | 6. Iteration |
| 1 | 1.0000 | 1.0000 | 1.0000 | 1.0000 | 1.0000 | 1.0000 |
| - 1.5 | - 1.5000 | - 1.5000 | - 1.5000 | - 1.5000 | - 1.5000 | - 1.5000 |
| - 5 | - 5.0000 | - 5.0000 | - 5.0000 | - 5.0000 | - 5.0000 | - 5.0000 |
| 0 | 0.1250 | 0.1304 | 0.1307 | 0.1309 | 0.1309 | 0.1309 |
| 0 | 0.1219 | 0.1310 | 0.1311 | 0.1309 | 0.1309 | 0.1309 |
| 0 | 0.0058 | 0.0012 | 0.0000 | 0.0000 | 0.0000 | 0.0000 |
| 1 | 0.9846 | 0.9828 | 0.9827 | 0.9827 | 0.9827 | 0.9827 |

Mit einem zugrunde gelegten Datensatz

$$x_s = 1\text{ m};\quad y_s = -1{,}5\text{ m};\quad z_s = -5\text{ m};\quad q_1 = 0;\quad q_2 = -0{,}1309;\quad q_3 = 0{,}1309;\quad q_4 = 0{,}9827 \quad (24)$$

gibt Tabelle 6 eine Berechnung (mit b = 0,9) wieder, bei der die Targetkonfiguration K im gegebenen Fall keine Nickbewegung ausführt. Hier wird für das Gieren (Quaternion $q_2$) und Rollen ($q_3$) wiederum eine gute Konvergenz sichtbar, indem das Quaternion $q_1$ (für die Nickbewegung) nach anfänglichem Schätzfehler (im ersten Iterationsschritt) in der fünften Iteration exakt auf den richtigen Wert (Null) zurückkehrt. Im selben Iterationsschritt erreichen auch $q_2$ und $q_3$ ihre tatsächlichen Werte.

Tabelle 6.

| Werte eines typischen Iterationsprozesses für die Lagebestimmung | | | | | | |
|---|---|---|---|---|---|---|
| Ergebnisse der Iteration: $x_s$, $y_s$, $z_s$ in Metern, $q_1$, $q_2$, $q_3$, $q_4$ | | | | | | |
| Startvektor | 1. | 2. | 3. | 4. | 5. | 6. Iteration |
| 1 | 1.0000 | 1.0000 | 1.0000 | 1.0000 | 1.0000 | 1.0000 |
| - 1.5 | - 1.5000 | - 1.5000 | -1.5000 | - 1.5000 | - 1.5000 | - 1.5000 |
| - 5 | - 5.0000 | - 5.0000 | - 5.0000 | - 5.0000 | - 5.0000 | - 5.0000 |
| 0 | - 0.0113 | - 0.0046 | - 0.0010 | - 0.0002 | 0.0000 | 0.0000 |
| 0 | - 0.1188 | - 0.1301 | - 0.1313 | - 0.1311 | - 0.1309 | - 0.1309 |
| 0 | 0.1022 | 0.1255 | 0.1299 | 0.1308 | 0.1309 | 0.1309 |
| 1 | 0.9876 | 0.9835 | 0.9828 | 0.9827 | 0.9827 | 0.9827 |

Wenn die Iteration auf der Grundlage vorhergehender Messungen durchgeführt wird, kann das neue Messergebnis sogar bereits in einem Schritt erhalten werden.

Falls die Rollwinkel relativ groß sind, empfiehlt es sich, in beiden Teilprozessen den Rollwinkel zu berücksichtigen.

Liste der verwendeten Bezugszeichen

E Empfängerebene

F Folgeregelkreis

H Abbildungsfunktion

K Targetkonfiguration

$L_i$ Lichtpunkte (in der Empfängerebene)

$T_i$ Leuchtpunkte / Retroreflektoren (des Targets)

$t_i$ Targetvektor

$p_{im}$ (projizierte) Bildpunktvektoren
$p_{mr}$ (berechnete) Bildpunktvektoren

d Abstand der Empfängerebene
v Abstandsvektor
$p_1^*$ Bildvektor (des Abstandsvektors)

c, s, q Zustandsgrößen (Position und Lage)
c Positionsvektor (im Target-Koordinatensystem)
s Positionsvektor (im Kamera-Koordinatensystem)
$q_1$,...$q_4$ Quaternionen (= Lagevektoren für Nick-, Gier- und Rollwinkel)

**Patentansprüche**

1. Verfahren zur Bestimmung der Zustandsgrößen, wie relativer Position und Lage, eines bewegten starren Körpers im Raum, insbesondere für eine Bewegung der relativen Annäherung an einen anderen Körper, unter Verwendung von Messdaten, die durch einen an dem einen Körper befindlichen Bildsensor bereitgestellt werden, wobei die Messdaten von mindestens vier Leuchtpunkten, deren Konfiguration am anderen Körper, bezogen auf dessen

körpereigenes Koordinatensystem, bekannt und so gewählt sind, dass wenigstens einer der Leuchtpunkte nicht innerhalb einer zur Annäherungsbewegung im Wesentlichen orthogonalen Ebene liegt,
**gekennzeichnet durch** folgende Schritte:

- Aufnahme von Lichtpunkten ($L_i$) als Abbildung einer mindestens vier Leuchtpunkte ($T_i$) umfassenden, dreidimensionalen Targetkonfiguration (K) mittels des Bildsensors, wobei in der Empfängerebene (E) des Bildsensors eine zweidimensionale Projektion der dreidimensionalen Targetkonfiguration (K) abgebildet wird,
- Bestimmung der x-y-Koordinaten von in die Empfängerebene (E) projizierten Lichtpunkten ($L_i$) als Messdaten in Form von projizierten Bildpunktvektoren ($p_{im}$),
- Berechnung der Zustandsgrößen (s, q) des bewegten Körpers mittels eines Folgeregelkreises (F), der die Messdaten von jeweils in einer Bildaufnahme projizierten Lichtpunkten ($L_i$) der Targetkonfiguration (K) unter Nutzung einer Umkehrfunktion ($H^{-1}$) zum gewünschten Ausgangssignal der Zustandsgrößen ($s_r$, $q_r$) des bewegten Körpers verarbeitet, wobei die Umkehrfunktion ($H^{-1}$) mittels einer mathematisch modellierten Abbildungsfunktion (H) des Bildsensors, die den Zusammenhang zwischen den Zustandsgrößen (s, q) von Position und Lage und den Koordinaten der Lichtpunkte ($L_i$) in der Empfängerebene (E) des Bildsensors für die gewählte Targetkonfiguration (K) beschreibt, in einer Rückführung (R) des Regelkreises realisiert wird, und
- Ausgabe der berechneten Koordinaten ($s_r$; $q_r$) als Messergebnis der Zustandsgrößen (s; q) für den Körper, dessen körpereigenes Koordinatensystem als Bezugskoordinatensystem der Berechnung gewählt wurde.

**2.** Verfahren nach Anspruch 1, **dadurch gekennzeichnet, dass** im Folgeregelkreis (F)

- ausgehend von geschätzten Anfangswerten ($s_{r0}$; $q_{r0}$) oder von Ergebnissen ($s_r$; $q_r$) von zuvor berechneten Koordinaten für Position und Lage der Targetkonfiguration (K), ein zu den Bildsensor-Messdaten der Targetkonfiguration (K) ähnlicher Datensatz von berechneten Bildpunktvektoren ($p_{imr}$) mit Hilfe eines in der Rückführung des Folgeregelkreises (F) implementierten Rückführoperator (R) auf Basis der bekannten optischen Abbildungsfunktion (H) für die Empfängerebene (E) errechnet wird,
- die Koordinaten der berechneten Bildpunktvektoren ($p_{imr}$) mit denen der projizierten Bildpunktvektoren ($p_m$) der tatsächlich aufgenommenen Lichtpunkte ($L_i$) verglichen werden und
- im Ergebnis des Vergleichs ein Fehlervektor (e) zur Korrektur der Koordinaten der zuvor geschätzten oder berechneten Zustandsgrößen ($s_{r0}$, $q_{r0}$; $s_r$, $q_r$) verwendet wird.

**3.** Verfahren nach Anspruch 2, **dadurch gekennzeichnet, dass**
im Folgeregelkreis (F) der Fehlervektor (e) mit einem linearen Übertragungsglied in Form einer Verstärkungsmatrix (V) gewichtet wird, wobei die Verstärkungsmatrix (V) auf Basis einer Empfindlichkeitsmatrix der Abbildungsfunktion (H), die die Veränderung der Lage der Lichtpunkte in der Empfängerebene des Bildsensors in Abhängigkeit von Änderungen der Position und Lage der Targetkonfiguration beschreibt und von der gewählten Targetkonfiguration sowie von der Entfernung zwischen Bildsensor und Target abhängt, gebildet wird.

**4.** Verfahren nach Anspruch 3, **dadurch gekennzeichnet, dass**
die Verstärkungsmatrix (V) zunächst für eine bestimmte Entfernung berechnet wird, und während des laufenden Regelungsprozesses des Folgereglers (F) in Abhängigkeit von der aktuell ermittelten Entfernung adaptiert wird.

**5.** Verfahren nach Anspruch 3, **dadurch gekennzeichnet, dass**
die Verstärkungsmatrix (V) zur Vermeidung einer Überempfindlichkeit gegen kleine Änderungen mit einem skalaren Faktor, der geringfügig kleiner als Eins ist, beaufschlagt wird.

**6.** Verfahren nach Anspruch 5, **dadurch gekennzeichnet, dass**
der skalare Faktor in der Größenordnung von 0,9 gewählt wird.

**7.** Verfahren nach Anspruch 3, **dadurch gekennzeichnet, dass**
in einem diskontinuierlichen Folgeregelkreis (F) nach Anwendung der Verstärkungsmatrix (V) ein Laufzeitglied (Z) für eine Iteration der errechneten Zustandsvektoren ($s_r$; $q_r$) auf Basis der Verbesserung des Ergebnisses verwendet wird durch Hinzunahme weiterer Fehlervektoren (e), die aus dem Vergleich von fortgesetzt neu berechneten Zustandsvektoren ($s_r$; $q_r$) mit demselben aufgenommenen Bildpunktvektor ($p_m$) erzeugt und mit der Verstärkungsmatrix gewichtet werden.

**8.** Verfahren nach Anspruch 3, **dadurch gekennzeichnet, dass**
in einem diskontinuierlichen Folgeregelkreis (F) nach Anwendung der Verstärkungsmatrix (V) ein Zwischenspeicher für eine Iteration der errechneten Zustandsvektoren ($s_r$; $q_r$) auf Basis der Verbesserung des Ergebnisses verwendet wird durch Hinzunahme weiterer Fehlervektoren (e), die aus dem Vergleich von fortgesetzt neu berechneten Zustandsvektoren ($s_r$; $q_r$) mit demselben aufgenommenen Bildpunktvektor ($p_m$) erzeugt und mit der Verstärkungsmatrix gewichtet werden.

**9.** Verfahren nach Anspruch 7 oder 8, **dadurch gekennzeichnet, dass** der Folgeregelkreis (F) bei Unterschreiten eines definierten Restfehlers des Fehlervektors (e) die Iteration abbricht und das Ergebnis als Messwert der Zustandsgrößen des bewegten Körpers ausgibt.

**10.** Verfahren nach Anspruch 7 oder 8, **dadurch gekennzeichnet, dass** im Folgeregelkreis (F) die Iteration nach einer definierten Anzahl von Takten (Umläufen) abgebrochen wird und das Ergebnis der Iteration infolge einer Abtastung des Bildsensors als Messwert der Zustandsgrößen (s, q) des bewegten Körpers ausgegeben wird.

**11.** Verfahren nach Anspruch 7 oder 8, **dadurch gekennzeichnet, dass** im Folgeregelkreis (F) der Bewertungspfad mit der Verstärkungsmatrix (V) getrennt für die Iteration der Positionsvektoren ($s_r$; $c_r$) und der Lagevektoren ($q_r$) genutzt wird, wobei für die Iterationszyklen von Positionsvektoren ($s_r$; $c_r$) und Lagevektoren ($q_r$) jeweils unterschiedliche reduzierte Verstärkungsmatrizen ($V_p$; $V_l$), die Teilmatrizen der vollständigen Verstärkungsmatrix (V) sind, verwendet werden und die nicht verarbeitete Zustandsgröße ($q_r$ bzw. $s_r$; $c_r$) jeweils unverändert dem Rückführoperator (R) zugeführt wird.

**12.** Verfahren nach Anspruch 11, **dadurch gekennzeichnet, dass** im Folgeregelkreis (F) die Iterationszyklen für Positionsvektoren ($s_r$; $c_r$) und Lagevektoren ($q_r$) jeweils sequenziell umgeschaltet werden, wobei die Anzahl der getrennten Iterationszyklen für die Positionsvektoren ($s_r$; $c_r$) und die Lagevektoren ($q_r$) nicht zwingend regelmäßig wechseln.

**13.** Verfahren nach Anspruch 12, **dadurch gekennzeichnet, dass** die Iterationszyklen zu Beginn der relativen Annäherungsbewegung des bewegten Körpers ausschließlich für die Positionsvektoren ($s_r$; $c_r$) angewendet werden und erst in der Endphase der Annäherung die Iterationszyklen für die Lagevektoren ($q_r$) zugeschaltet werden.

**14.** Verfahren nach Anspruch 12, **dadurch gekennzeichnet, dass** die Iterationszyklen bei unterschiedlicher Dauer der Sequenz für Positionsvektoren ($s_r$; $c_r$) und Lagevektoren ($q_r$) regelmäßig umgeschaltet werden.

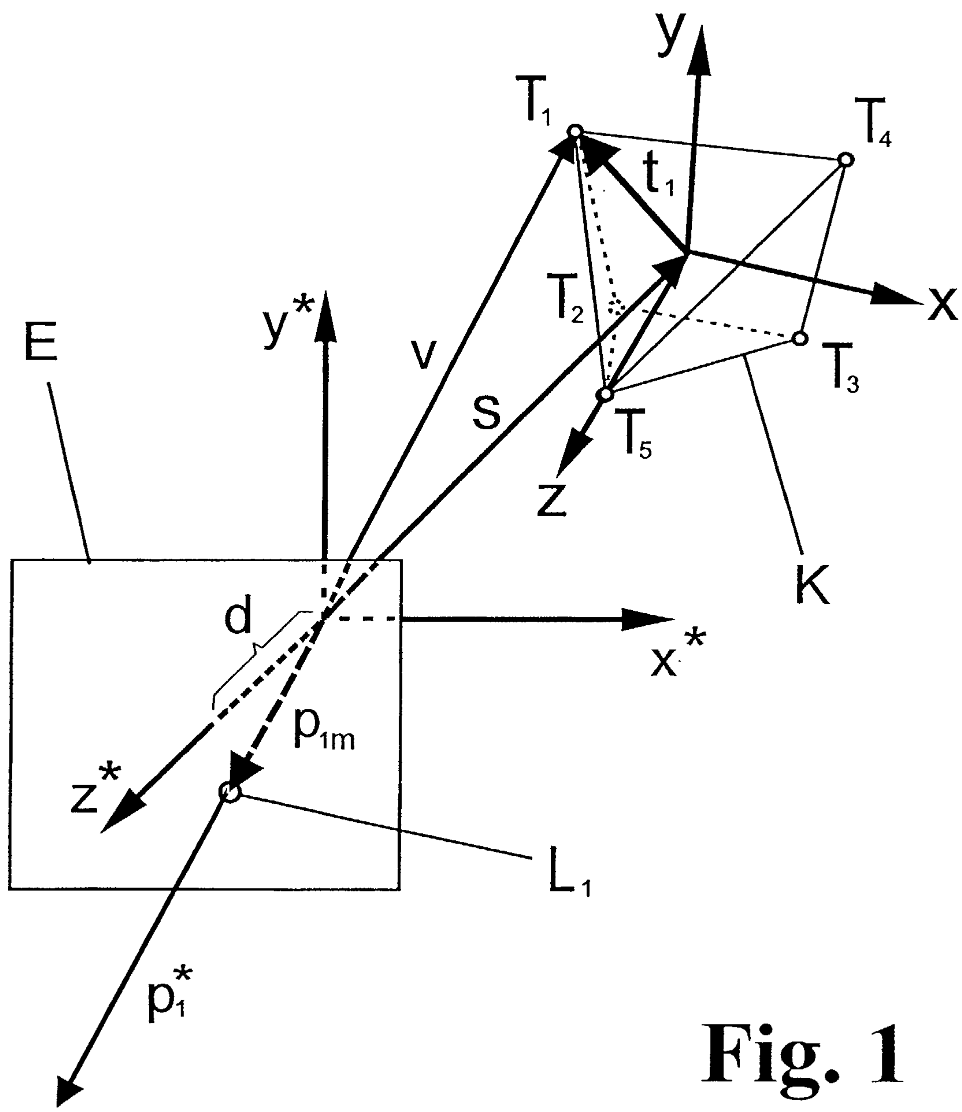
y
T1
T4
t1
x
T2
E
y*
v
T3
s
T5
z
K
d
x*
p1m
z*
L1
p*1

Fig. 1

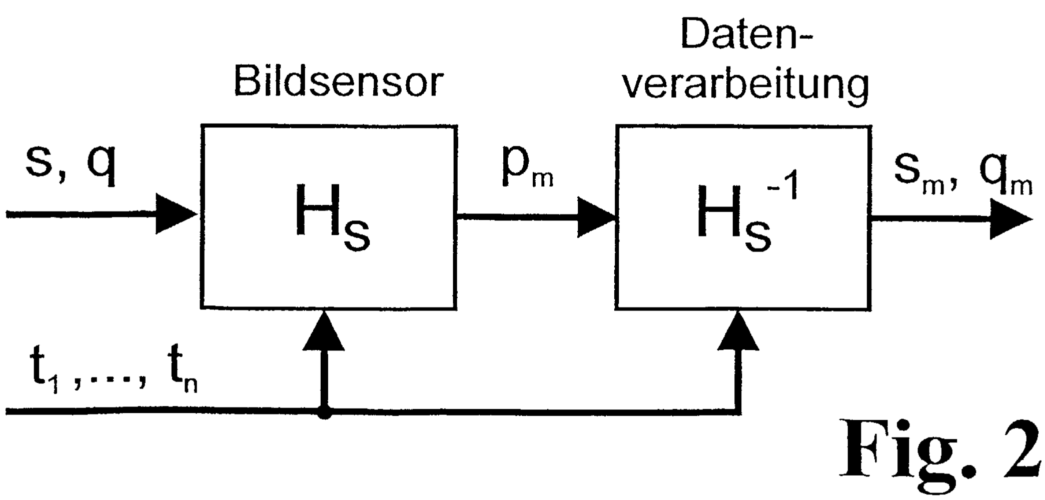
Daten-
verarbeitung
Bildsensor
s, q
Hs
pm
Hs-1
sm, qm
t1 ,..., tn

Fig. 2

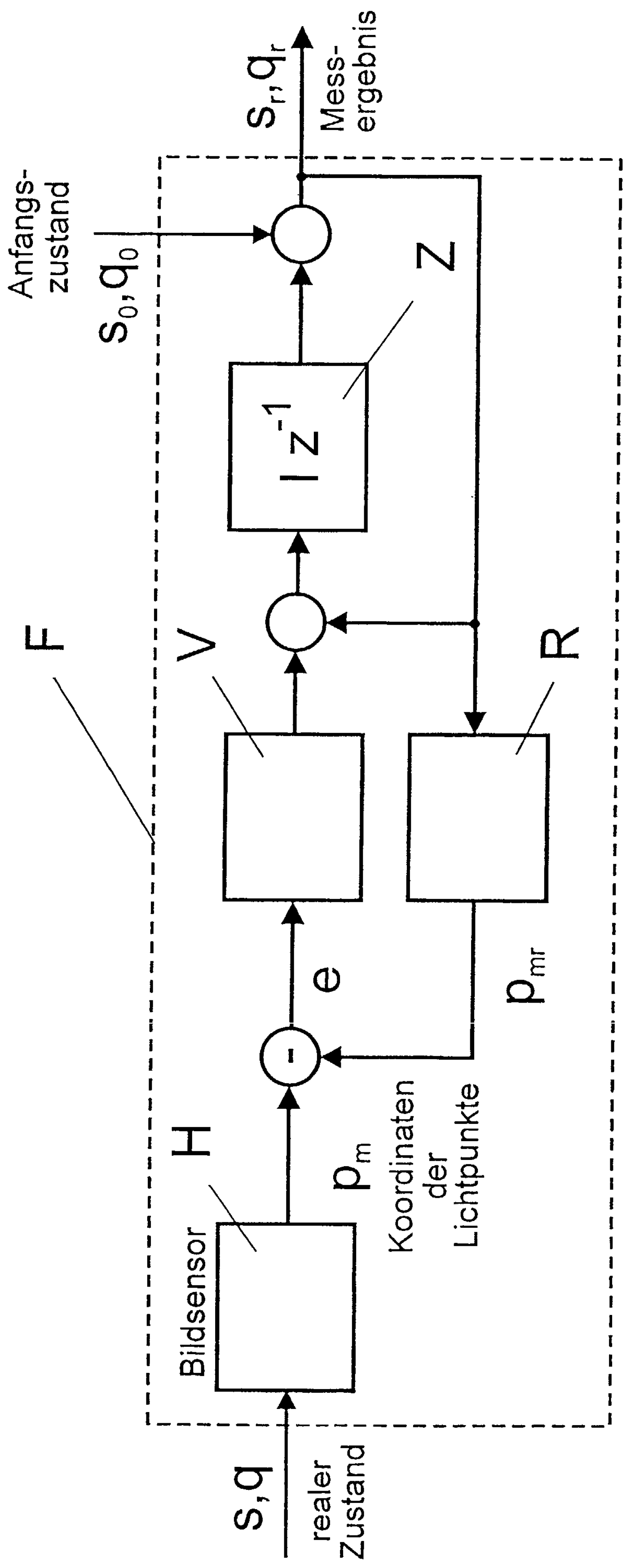
s,q
realer Zustand
Bildsensor
H
$p_m$
Koordinaten der Lichtpunkte
e
$p_{mr}$
F
V
R
I z-1
Z
Anfangs-zustand
$s_0,q_0$
$s_r,q_r$
Mess-ergebnis

Fig. 3

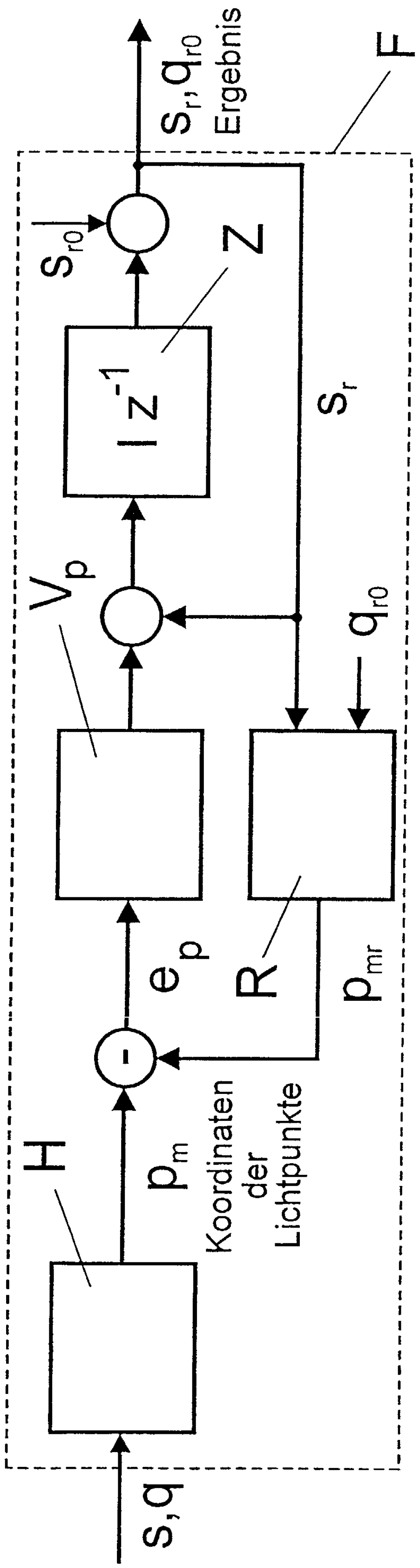
s,q
H
$p_m$
Koordinaten
der
Lichtpunkte
-
$e_p$
R
$p_{mr}$
$V_p$
$q_{r0}$
$s_r$
$I z^{-1}$
Z
$s_{r0}$
$s_r, q_{r0}$
Ergebnis
F

Fig. 4

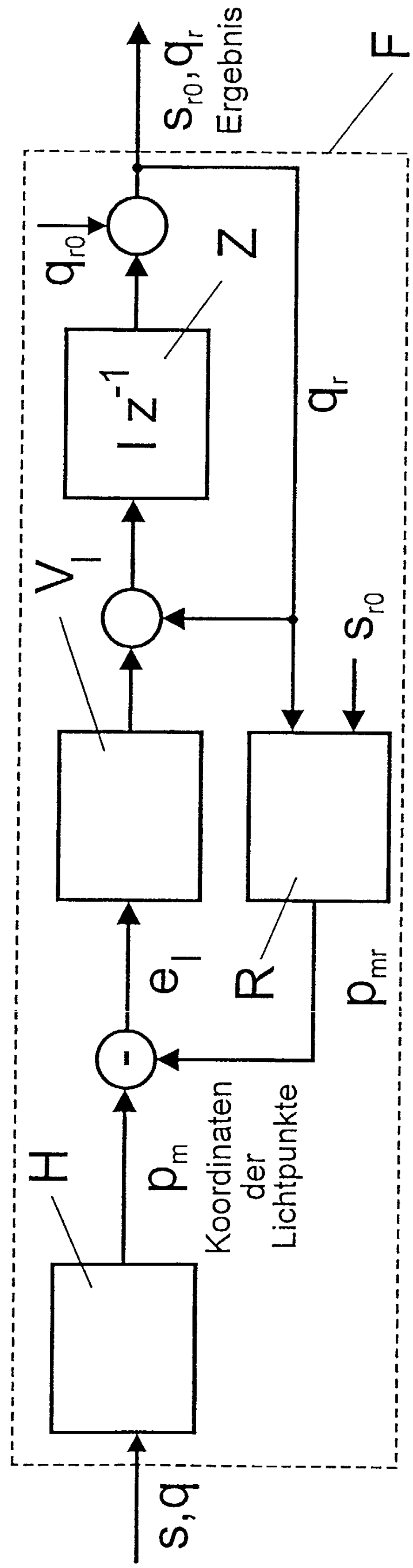
s,q
H
$p_m$
Koordinaten
der
Lichtpunkte
-
$e_I$
R
$p_{mr}$
$V_I$
$s_{r0}$
$q_r$
$I z^{-1}$
Z
$q_{r0}$
$s_{r0}, q_r$
Ergebnis
F

Fig. 5

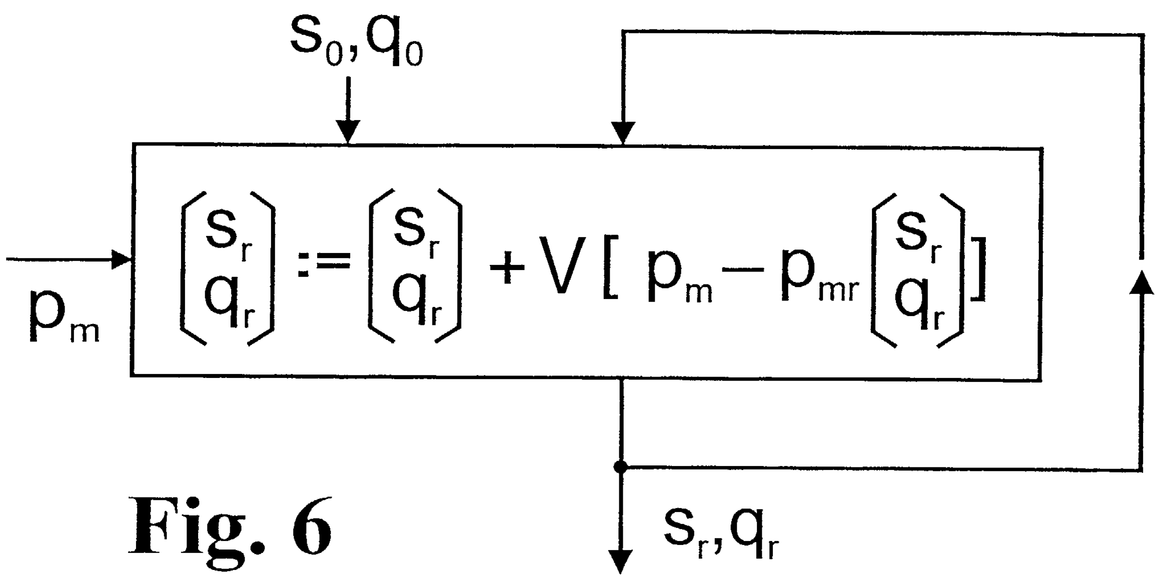
$s_0, q_0$
$p_m$
$\begin{pmatrix} s_r \\ q_r \end{pmatrix} := \begin{pmatrix} s_r \\ q_r \end{pmatrix} + V[\, p_m - p_{mr}\begin{pmatrix} s_r \\ q_r \end{pmatrix}]$
$s_r, q_r$

**Fig. 6**

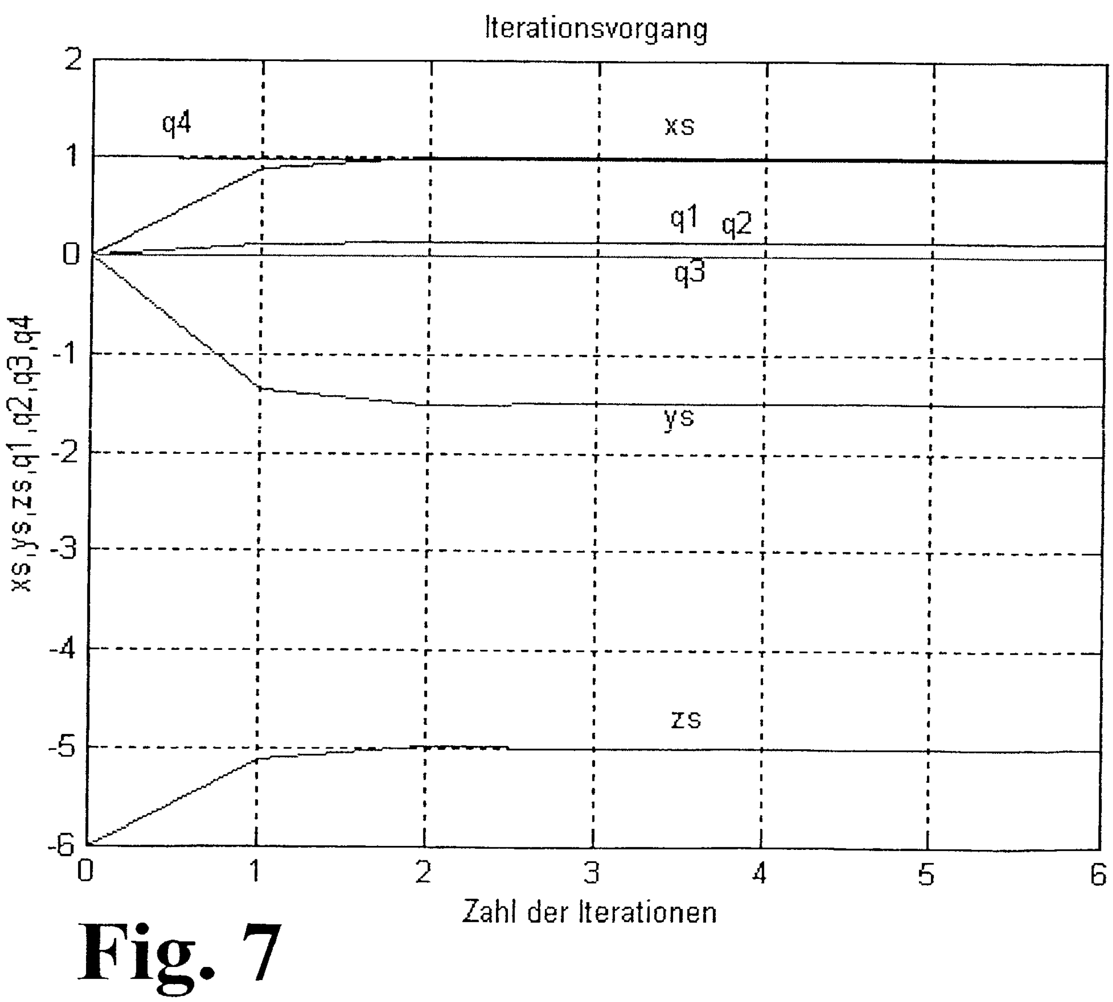
Iterationsvorgang
xs,ys,zs,q1,q2,q3,q4
Zahl der Iterationen
q4
xs
q1
q2
q3
ys
zs
2
1
0
-1
-2
-3
-4
-5
-6
0
1
2
3
4
5
6

**Fig. 7**